# EUROPÄISCHE PATENTSCHRIFT

(11) **EP 3 783 302 B1**
(45) Veröffentlichungstag und Bekanntmachung des Hinweises auf die Patenterteilung: **26.04.2023**
(21) Anmeldenummer: 19192463.8
(22) Anmeldetag: 20.08.2019
(51) Int. Cl.: G01B 11/24, G06T 7/174, G01B 21/04, G01B 11/02, G01B 11/06, G01B 11/28, G06T 7/12, G06T 7/55, G06T 7/62

(54) **OBJEKTVERMESSUNGSSYSTEM FÜR EINE VERPACKUNGSMASCHINE ZUM ERMITTELN DER ABMESSUNGEN EINER GRUNDFLÄCHE UND EINER HÖHE EINER ZU UMWICKELNDEN VERPACKUNGSSCHALE**
OBJECT MEASURING SYSTEM FOR A PACKAGING MACHINE FOR DETERMINING THE DIMENSIONS OF A BASE SURFACE AND A HEIGHT OF A PACKAGING TRAY TO BE WRAPPED
SYSTÈME DE MESURE D'OBJET POUR UNE MACHINE D'EMBALLAGE PERMETTANT DE DÉTERMINER LES DIMENSIONS D'UNE SURFACE DE BASE ET D'UNE HAUTEUR D'UNE BARQUETTE D'EMBALLAGE À ENROULER

(43) Veröffentlichungstag der Anmeldung: 24.02.2021
(73) Patentinhaber: Bizerba SE & Co. KG, 72336 Balingen (DE)
(72) Erfinder: Zobel, Rudolf, 72336 Balingen (DE); Pries, Markus, 72488 Sigmaringen (DE)
(74) Vertreter: Manitz Finsterwald Patent- und Rechtsanwaltspartnerschaft mbB

(56) Entgegenhaltungen:
- WO-A1-2013/153104
- US-A1- 2008 253 648
- US-A1- 2012 314 078
- US-B1- 6 546 356

## Beschreibung

Die vorliegende Erfindung betrifft ein Objektvermessungssystem für eine Verpackungsmaschine, welche zum Umwickeln von Verpackungsschalen mit einer Folie eingerichtet ist, zum Ermitteln der Abmessungen einer Grundfläche und einer Höhe einer zu umwickelnden Verpackungsschale.

Aus dem Lebensmittelhandel sind Verpackungsschalen bekannt, in denen Lebensmittelprodukte abgepackt sind, wobei das Lebensmittelprodukt und die Schale von einer Stretchfolie umwickelt sind. Allgemein werden Verpackungsschalen für Lebensmittelprodukte auch als Trays bezeichnet. Zum Verpacken kommt dabei beispielsweise eine Verpackungsmaschine, wie sie in dem Dokument EP 3 093 244 A1 offenbart ist, zum Einsatz, die eine Folienzuführeinrichtung zum Zuführen der Folie, eine Folienschneideinrichtung, um die Folie von der übrigen Folienrolle zu trennen, einen Haltemechanismus zum Halten der zugeführten Folie an zwei aneinander gegenüberliegenden Seiten und ein Zuführband umfasst, mit dem die Schalen mit den Lebensmittelprodukten einer Hebeeinrichtung zugeführt werden. Die Hebeeinrichtung hebt dann die zugeführte Schale gegen die Stretchfolie, so dass die Folie über die Schale gespannt wird. Die Stretchfolie kann dabei vorgespannt sein, d.h. der Abstand der beiden Haltemittel wird, nach Zuführung der Stretchfolie und bevor die Schale mit dem Lebensmittelprodukt gegen die Folie angehoben wird, vergrößert. Hierdurch wird erreicht, dass sich die Folie gleichmäßig und sauber an die Schale mit dem Lebensmittelprodukt anlegen kann. Anschließend wird die Folie mittels seitlicher Faltzangen und mittels einer hinteren Faltzange um die Schale geführt und unter den Schalenboden gefaltet. Beim Verlassen der Hebeeinrichtung wird auch das vordere Folienende unter den Schalenboden gefaltet. Danach wird die Folie unter der Schale verschweißt, z.B. mittels einer Wärmeplatte, über die die Schale geführt wird. Die Schale mit dem Lebensmittel ist dann vollständig von einer gespannten Folie eingeschlossen. In dem Dokument EP 3 187 425 A1 wird der Haltemechanismus derart verstellt, dass der Abstand der beiden Haltemittel voneinander verringert wird. Das Verringern des Abstandes der beiden Haltemittel voneinander bewirkt, dass die Folie zwischen den beiden Haltemitteln durchhängt. Hierdurch kann erreicht werden, dass Verpackungsschalen mit hohen instabilen Seitenwänden nicht zerstört werden, wenn die Verpackungsschalen von unten gegen die Folie gedrückt werden.

Dabei ist es von Vorteil, wenn der Verpackungsmaschine der Schalentyp und/oder die Höhe und/oder die Grundfläche der zugeführten Schale bekannt ist, da dann die Steuerung der Faltzangen, das Ablängen der Folie, d.h. das Zuschneiden der Folie auf eine bestimmte Länge, und/oder ggf. das Maß der Verringerung des Abstandes der beiden Haltemittel voneinander in Abhängigkeit von dem Schalentyp und/oder wenigstens einer Abmessung der zugeführten Schale erfolgen kann. Der Verpackungsvorgang kann dann an die jeweilige zugeführte Verpackungsschale angepasst werden. Insbesondere kann vorgesehen sein, dass die Ausgangsposition und/ oder der Bewegungsablauf der Faltzangen an die jeweilige Schale angepasst wird, bei breiteren Verpackungsschalen eine Folie mit einer größerer Länge abgeschnitten wird und/ oder der Abstand der beiden Haltemittel voneinander umso weiter verringert wird, je größer die Höhe und/oder die Grundfläche (oder der Footprint) der zugeführten Verpackungsschale ist.

Eine Möglichkeit, der Verpackungsmaschine das benötigte Maß der Verringerung vorzugeben, kann dadurch erfolgen, dass ein Benutzer der Verpackungsmaschine den Schalentyp und/oder die Höhe und/oder die Grundfläche der zugeführten Schale in eine Eingabeeinheit der Verpackungsmaschine eingibt. Eine derartige manuelle Eingabe ist jedoch umständlich und fehleranfällig. Dies gilt insbesondere dann, wenn der Verpackungsmaschine verschiedene Schalentypen ungeordnet nacheinander zugeführt werden. Wenn die Eingabe fehlerhaft erfolgt oder nach einem Wechsel des Schalentyps eine Änderung der eingegebenen Werte unterbleibt, wird die Verpackungsmaschine unter Umständen mit einem fehlerhaften Wert für die Steuerung der Faltzangen, das Ablängen der Folie und das Maß der Verringerung des Abstandes der beiden Haltemittel voneinander betrieben, was z.B. dazu führen kann, dass das Falten der Folie unter den Schalenboden nicht mit der für den jeweiligen Schalentyp maximalen Geschwindigkeit erfolgt, die Folie zu kurz oder zu lang abgeschnitten ist und/oder die Folie zu wenig oder zu viel durchhängt, so dass die Verpackungsschale einschließlich des Verpackungsguts zu locker oder zu straff von der Stretchfolie umwickelt ist.

Das Dokument WO 2013/153104 A1 offenbart eine Vorrichtung zum Versiegeln von Verpackungsschalen mit einer Folie, wobei mittels einer Kamera die Form, die Größe und die Ausrichtung der Verpackungsschalen detektiert werden. Das Dokument US 2012/0314078 A1 betrifft allgemein das Gebiet der Bildverarbeitung und offenbart eine Vorrichtung zum Überwachen eines Objekts in einem Bild, das von einer Kamera aufgenommen wird. Das Dokument US 6,546,356 B1 offenbart eine Vorrichtung, um einen Fuß dreidimensional zu vermessen. Der Fuß wird auf eine Bodenplatte und vor eine Rückwand gestellt, die beide mit einem Schachbrettmuster versehen sind. Bei der Vermessung kommen zwei "top"-Kameras, die nach unten gerichtet sind (Aufsicht), und zwei einander gegenüberliegende, höhenverstellbare, horizontal ausgerichtete Kameras oder eine Kamera, die um 180° um die Vertikale drehbar ist, (Seitenansicht) zum Einsatz. Mit den "top"-Kameras kann der Umriss des Fußes gemessen werden, mit den höhenverstellbaren, horizontal ausgerichteten Kameras z.B. die Höhe des Ristes des Fußes.

Der Erfindung liegt die Aufgabe zugrunde, ein Objektvermessungssystem für eine Verpackungsmaschine anzugeben, welches in zuverlässiger Weise die Abmessungen einer Grundfläche und einer Höhe einer zu umwickelnden Verpackungsschale ermitteln kann.

Die Lösung der Aufgabe erfolgt durch ein Objektvermessungssystem mit den Merkmalen des Anspruchs 1. Ein erfindungsgemäßes Objektvermessungssystem umfasst einen Aufnahmeraum für die Verpackungsschale, eine erste und eine zweite Kamera zum Aufnehmen von elektronischen Bildern, nämlich Farbbildern, einer jeweiligen im Aufnahmeraum angeordneten Verpackungsschale, wobei die erste und die zweite Kamera derart zueinander und in Bezug auf den Aufnahmeraum angeordnet sind, dass die Erfassungsrichtungen der beiden Kameras quer, insbesondere orthogonal, zueinander verlaufen, und dass die erste Kamera eine Aufsicht der Verpackungsschale und die zweite Kamera eine Seitenansicht der Verpackungsschale erfasst, und eine mit den Kameras verbundene Auswerteeinrichtung zum Auswerten der von den Kameras aufgenommenen Bilder der Verpackungsschale, wobei die Auswerteeinrichtung dazu eingerichtet ist, in einem Farbbild der Aufsicht eine Grundflächenkontur der erfassten Verpackungsschale zu ermitteln, in dem Farbbild der Aufsicht einen Farbwert für den von der Grundflächenkontur umgrenzten Bereich zu ermitteln, auf der Grundlage des ermittelten Farbwerts in dem Farbbild der Seitenansicht einen der Seitenfläche der erfassten Verpackungsschale entsprechenden Bildbereich auszuwählen, welcher einen zu dem ermittelten Farbwert korrespondierenden Farbwert aufweist, auf der Grundlage des ausgewählten, der Seitenfläche entsprechenden Bildbereichs die Höhe der erfassten Verpackungsschale zu ermitteln, und auf der Grundlage der ermittelten Grundflächenkontur die Abmessungen der Grundfläche der erfassten Verpackungsschale zu ermitteln.

Unter einem korrespondierenden Farbwert wird ein Farbwert verstanden, welcher dem ermittelten Farbwert einschließlich eines vorgegebenen Toleranzbereichs entspricht. Hierfür wird in einfacher Weise ausgenutzt, dass die zu vermessenden Verpackungsschalen zumeist eine homogene Farbgebung aufweisen.

Üblicherweise weist eine Verpackungsschale einen Boden und eine umlaufende Wandung auf, wobei die Wandung relativ zum Boden orthogonal oder leicht nach außen geneigt verläuft, wobei sich im letzteren Fall der Querschnitt der Verpackungsschale zum oberen, offenen Ende hin erweitert. Es ist vorgesehen, dass die Verpackungsschale derart in dem Aufnahmeraum angeordnet wird, dass die Erfassungsrichtung der Aufsicht auf den Boden der Verpackungsschale und die Erfassungsrichtung der Seitenansicht auf eine Wandung oder Seitenfläche der Verpackungsschale weist. Die Erfassungsrichtungen der Kameras sind jeweils durch deren optische Achsen definiert. Unter der Grundfläche der Verpackungsschale (oder deren Footprint) wird nicht zwingend die Fläche des Bodens der Verpackungsschale verstanden, sondern insbesondere bei sich nach oben erweiternden Schalen eine Fläche, welche sich durch eine in Aufsicht, d.h. vertikal zum Boden der Verpackungsschale, erzeugte Orthogonalprojektion der Verpackungsschale ergibt.

Die ermittelten Abmessungen der Grundfläche und der Höhe der erfassten, zu verpackenden Verpackungsschale können an eine Steuereinrichtung der Verpackungsmaschine übermittelt werden, woraus diese beispielsweise die notwendigen Parameter für die Steuerung der Faltzangen, das Ablängen der Folie und/oder zum Verstellen des Haltemechanismus für die Verpackungsfolie, insbesondere den Abstand der beiden Haltemittel, ermitteln oder errechnen kann. Alternativ kann anhand der Abmessungen der Grundfläche und der Höhe ein vordefinierter Typ einer Verpackungsschale ermittelt werden, für den in der Verpackungsmaschine die entsprechenden einzustellenden Parameter hinterlegt sind, beispielsweise in Form einer Zuordnungstabelle.

Ein Vorteil des erfindungsgemäßen Objektvermessungssystems besteht insbesondere darin, dass durch die Berücksichtigung von zwei Perspektiven auch solche Schalen zuverlässig voneinander unterschieden werden können, welche sich zwar sowohl bezüglich ihrer Grundfläche als auch bezüglich ihrer Höhe voneinander unterscheiden, in der Aufsicht jedoch gleich groß erscheinen.

Gemäß einer vorteilhaften Ausführungsform der Erfindung umfasst der Aufnahmeraum zumindest eine erste, der ersten Kamera gegenüberliegende Begrenzungsfläche, welche zumindest in einem von der ersten Kamera erfassbaren Teilbereich eine durch ein Muster gebildete erste zweidimensionale Maßverkörperung aufweist, wobei die Aufsicht neben einem Abbild der Verpackungsschale auch ein Abbild von erfassten, nicht durch die Verpackungsschale verdeckten Bereichen der ersten Maßverkörperung umfasst, wobei die Auswerteeinheit dazu eingerichtet ist, auf der Grundlage des in der Aufsicht erfassten Bereichs der ersten Maßverkörperung die Abmessungen der Grundfläche der erfassten Verpackungsschale zu ermitteln.

Die Maßverkörperung stellt insbesondere einen Maßstab dar, anhand dessen sich die Abmessungen der Grundfläche der Verpackungsschale gegebenenfalls unter Berücksichtigung von Umrechnungs- und/oder Skalierungsfunktionen ermitteln lassen. Das Merkmal, wonach auf der Grundlage des in der Aufsicht erfassten Bereichs der ersten Maßverkörperung die Abmessungen der Grundfläche der erfassten Verpackungsschale und auf der Grundlage der Seitenansicht die Höhe der erfassten Verpackungsschale ermittelt werden, schließt nicht aus, das bei der Ermittlung der genannten Maße zusätzlich auch weitere Parameter mit einfließen können, z.B. Lageparameter wie etwa der Abstand der Verpackungsschale von der jeweiligen Kamera und/oder einer jeweiligen Maßverkörperung. Diese weiteren Parameter können insbesondere aus dem jeweils anderen Abbild gewonnen werden. So kann z.B. bei der Ermittlung der Abmessungen der Grundfläche der Abstand der Verpackungsschale von der ersten Kamera aus der Seitenansicht und bei der Ermittlung der Höhe der Abstand von der zweiten Kamera aus der Aufsicht ermittelt oder zumindest abgeschätzt werden.

Gemäß einer weiteren vorteilhaften Ausführungsform der Erfindung umfasst der Aufnahmeraum ferner eine zweite, der zweiten Kamera gegenüberliegende Begrenzungsfläche, welche jeweils zumindest in einem von der zweiten Kamera erfassbaren Teilbereich eine durch ein Muster gebildete zweite zweidimensionale Maßverkörperung aufweist, wobei die Seitenansicht neben einem Abbild der Verpackungsschale, insbesondere einschließlich eines gegebenenfalls in der Verpackungsschale aufgenommenen Verpackungsguts, auch ein Abbild von erfassten, nicht durch die Verpackungsschale, insbesondere einschließlich des gegebenenfalls in der Verpackungsschale aufgenommenen Verpackungsguts, verdeckten Bereichen der zweiten Maßverkörperung umfasst, wobei die Auswerteeinrichtung dazu eingerichtet ist, auf der Grundlage des in der Seitenansicht erfassten Bereichs der zweiten Maßverkörperung zumindest eine Abmessung einer Seitenfläche der erfassten Verpackungsschale, insbesondere einschließlich des gegebenenfalls in der Verpackungsschale aufgenommenen Verpackungsguts, zu ermitteln, wobei die zumindest eine Abmessung der Seitenfläche die Höhe der Seitenfläche der erfassten Verpackungsschale und/oder eine Gesamthöhe der Seitenfläche der erfassten Verpackungsschale einschließlich des gegebenenfalls in der Verpackungsschale aufgenommenen Verpackungsguts umfasst. Mittels der zweiten Maßverkörperung können gemäß dieser vorteilhaften Ausführungsform auch die Höhe oder die Abmessungen (Höhe und Breite) der Seitenfläche der Verpackungsschale alleine oder der Verpackungsschale einschließlich eines in der Verpackungsschale aufgenommenen Verpackungsguts, welches die Verpackungsschale überragt, ermittelt werden. Auch die zweite Maßverkörperung stellt somit einen Maßstab dar, der es ermöglicht, die gewünschten Abmessungen der Seitenfläche (Höhe und/oder Breite) zu ermitteln. Hierbei ist insbesondere die Höhe der Seitenfläche von besonderem Interesse, da hierdurch das Ablängen und/oder das Durchhängen der Folie bei einer Verpackungsmaschine der eingangs beschriebenen Art noch präziser gesteuert werden kann. Zudem kann die hierbei ermittelte Höhe dazu dienen, perspektivische Verzerrungen rechnerisch zu kompensieren, welche bei unterschiedlich hohen Verpackungsschalen zu Ungenauigkeiten bei der vorstehend genannten Ermittlung der Abmessungen der Grundfläche der Verpackungsschale auf der Grundlage der ersten Maßverkörperung beeinträchtigen. Die erwähnte Breite der Verpackungsschale als weitere Abmessung entspricht einer der Abmessungen der Grundfläche der Verpackungsschale, d.h. der Länge einer der Kanten der Grundfläche, so dass dieses Maß in redundanter Weise bestimmt werden kann, um gegebenenfalls einen Vergleich oder Abgleich mit der korrespondierenden, auf der Grundlage der ersten Maßverkörperung ermittelten Abmessung durchführen zu können.

Gemäß einer weiteren vorteilhaften Ausführungsform ist das Muster, welches die erste Maßverkörperung bildet, und/oder das vorgenannte Muster, welches die vorgenannte zweite Maßverkörperung bildet, auf der Grundlage eines Schachbrettmusters erzeugt. Unter einem Schachbrettmuster wird ein Muster verstanden, welches aus Quadraten besteht, deren Farben sich sowohl horizontal als auch vertikal abwechseln. Bevorzugt weist das Schachbrettmuster weiße und schwarze Quadrate auf, da hierdurch ein besonders hoher Kontrast gegeben ist. Die Kantenlänge der Quadrate kann in geeigneter Weise gewählt werden, beispielsweise in einem Bereich zwischen einigen Millimetern bis zu einigen Zentimetern, beispielsweise aus einem Bereich zwischen 5 mm und 2 cm, wobei in Abhängigkeit von der Größe der zu vermessenden Verpackungsschalen auch größere oder kleinere Werte für die Kantenlänge gewählt werden können.

Alternativ zu einem Schachbrettmuster kann auch ein Linienmuster verwendet werden, welches äquidistante, horizontal und vertikal verlaufende Linien umfasst. Ein derartiges Muster sich kreuzender Linien wird umgangssprachlich auch als Karomuster bezeichnet. Der horizontale und vertikale Abstand der Linien ist vorzugsweise gleich. Für einen maximalen Kontrast werden bevorzugt weiße Linien auf einem schwarzen Untergrund oder umgekehrt vorgesehen.

Gemäß einer weiteren vorteilhaften Ausführungsform ist das Muster, welches die erste Maßverkörperung bildet, und/oder das vorgenannte Muster, welches die vorgenannte zweite Maßverkörperung bildet, auf der Grundlage eines regelmäßigen Musters und einer Verzerrungsfunktion erzeugt, wobei die Verzerrungsfunktion derart gewählt ist, dass die Verzerrungsfunktion optischen Verzeichnungen, welche durch ein Objektiv der die jeweilige Maßverkörperung erfassenden Kamera erzeugt werden, entgegenwirkt. Aus Platzgründen kann es insbesondere erforderlich sein, die erste und/oder die zweite Kamera jeweils mit einem Weitwinkelobjektiv auszustatten. Insbesondere sehr kurzbrennweitige Weitwinkelobjektive weisen oftmals perspektivische Verzerrungen oder Verzeichnungen auf, insbesondere tonnenförmige oder kissenförmige Verzeichnungen. Diese Verzerrungen oder Verzeichnungen können die Genauigkeit bei der Auswertung der von den Kameras aufgenommenen Bilder beeinträchtigen. Durch die Wahl einer geeigneten, an das jeweils verwendete Objektiv angepassten Verzerrungsfunktion können die durch die optischen Verzeichnungen des Objektivs hervorgerufenen Verzerrungen im Abbild der Maßverkörperung reduziert werden, so dass das von einer jeweiligen Kamera erfasste Abbild der Maßverkörperung geometrisch ähnlich zu dem regelmäßigen Muster ist. Mittels der Verzerrungsfunktion werden zum Beispiel gerade Linien im ursprünglichen Muster in gekrümmte Linien umgewandelt, so dass diese gekrümmten Linien in einem von der Kamera erzeugten Bild aufgrund der Verzeichnungen des Objektivs wieder als gerade Linien erscheinen. Die Verzerrungsfunktion kann aus den Abbildungseigenschaften des Objektivs berechnet und/oder empirisch bestimmt werden. Unter dem genannten regelmäßigen Muster wird insbesondere ein Muster mit äquidistanten, entlang vertikalen und horizontalen Linien verlaufenden Strukturen verstanden. Das regelmäßige Muster kann insbesondere dem vorstehend genannten Schachbrettmuster oder Linienmuster entsprechen.

Vorteilhafterweise ist die Auswerteeinrichtung dazu eingerichtet, aus einem Bild, insbesondere einem aus einem Farbbild hervorgegangenen Grauwertbild, der Aufsicht der Verpackungsschale einschließlich der nicht durch die Verpackungsschale verdeckten Bereiche der ersten Maßverkörperung oder aus einem Differenzbild, welches durch eine Differenz des Bildes der Aufsicht der Verpackungsschale und einem Referenzbild, insbesondere einem aus einem Farbreferenzbild hervorgegangenen Grauwertreferenzbild, der unverdeckten ersten Maßverkörperung gebildet ist, durch Anwendung zumindest eines Bildverarbeitungsschritts ein bearbeitetes Bild zu erzeugen, in welchem diejenigen Bildinformationen, welche Strukturen der ersten Maßverkörperung repräsentieren, in Form einer Menge von Bildpunkten vorliegen, wobei bevorzugt der zumindest eine Bildverarbeitungsschritt aus einer Gruppe ausgewählt ist, welche eine Bildschärfeerhöhung, eine Kantendetektion, eine Rauschunterdrückung, eine Detektion von Rechtecken und eine Detektion von Eckpunkten der detektierten Rechtecke umfasst. Weitere Bildverarbeitungsschritte umfassen Sobel- und/oder Laplace-Transformationen oder eine sogenannte "non-maximum-suppression", welche sicherstellt, dass eine Kante nicht mehr als ein Pixel breit ist.

Das genannte Referenzbild zeigt die erste Maßverkörperung ohne eine in den Aufnahmeraum eingebrachte Verpackungsschale. Das Referenzbild wird bevorzugt vorgängig erzeugt und in der Auswerteeinheit gespeichert. Bei dem Differenzbild handelt es sich insbesondere um ein durch Subtraktion des Bildes der Aufsicht der Verpackungsschale und des Referenzbildes erzeugtes Bild, bei dem im Wesentlichen nur noch in demjenigen Bildbereich Bildinformationen enthalten sind, welche die Verpackungsschale repräsentiert. Neben diesen Bildinformationen können gegebenenfalls noch etwaige Artefakte in dem Differenzbild vorhanden sein, welche beispielsweise auf Intensitätsabweichungen, Schattenwurf oder Rauschen zurückzuführen sind. Im Differenzbild subtrahieren sich die nicht durch die Verpackungsschale verdeckten Bereiche der ersten Maßverkörperung in dem Bild der Aufsicht der Verpackungsschale und die korrespondierenden Bereiche in dem Referenzbild zu Null. In dem die Verpackungsschale repräsentierenden Bildbereich des Differenzbildes sind insbesondere auch Bildinformationen enthalten, welche die erste Maßverkörperung repräsentieren und gegebenenfalls die zumeist relativ homogene oder kontrastarme Abbildung der Verpackungsschale überlagern.

Somit sind die vorstehend genannten Bildinformationen, welche im Wesentlichen Strukturen der ersten Maßverkörperung repräsentieren, entweder Bildinformationen, in dem die Verpackungsschale repräsentierenden Bildbereich, wenn das Ausgangsbild, aus welchem das bearbeitete Bild erzeugt wird, das Differenzbild ist, oder Bildinformationen in demjenigen Bildbereich, welcher komplementär zu dem die Verpackungsschale repräsentierenden Bildbereich ist, wenn das Ausgangsbild für das bearbeitete Bild das ursprüngliche Bild der Aufsicht der Verpackungsschale ist.

Die genannte Bildschärfeerhöhung kann beispielsweise durch Anwendung eines Gauß-Filters durchgeführt werden. Eine Kantendetektion kann beispielsweise durch Anwendung des sogenannten Canny-Algorithmus erfolgen.

Bei den genannten Bildpunkten handelt es sich um sehr kleine Bildbereiche, welche in der Regel weniger als zehn Pixel, bevorzugt weniger als fünf Pixel, insbesondere nur ein Pixel umfassen.

Weitere Bildverarbeitungsschritte können das Auffinden von Rechtecken bestimmter Größe in einem Zwischenbild, welches nach Durchführung der Kantendetektion erzeugt wurde, umfassen. Schließlich können die Eckpunkte der zuvor aufgefundenen Rechtecke extrahiert werden. Bei diesen Eckpunkten handelt es sich insbesondere um die vorstehend genannte Menge von Bildpunkten.

In diesem Zusammenhang kann der Ausdruck "Bild der Aufsicht" ein Bild der Aufsicht der Verpackungsschale, das genannte Differenzbild als Differenz zwischen dem Bild der Aufsicht der Verpackungsschale und dem genannten Referenzbild und/oder ein bearbeitetes Bild als bearbeitetes Bild der Aufsicht der Verpackungsschale oder als bearbeitetes Differenzbild umfassen. Bei dem Bild der Aufsicht der Verpackungsschale kann es sich um ein Farbbild, ein insbesondere aus einem Farbbild hervorgegangenes Grauwertbild oder ein insbesondere aus einem Farbbild oder einem Grauwertbild hervorgegangenes Schwarzweißbild handeln, und bei dem Referenzbild kann es sich um ein Farbreferenzbild, ein insbesondere aus einem Farbreferenzbild hervorgegangenes Grauwertreferenzbild oder ein insbesondere aus einem Farbreferenzbild oder einem Grauwertreferenzbild hervorgegangenes Schwarzweißreferenzbild handeln.

Gemäß einer vorteilhaften Weiterbildung dieser Ausführungsform ist die Auswerteeinrichtung dazu eingerichtet, die Abmessungen der Grundfläche in dem bearbeiteten Bild auf der Grundlage der Fläche einer kleinstmöglichen Grundflächenkontur als den die Verpackungsschale repräsentierenden Bildbereich zu ermitteln, welche die Menge von Bildpunkten umgrenzt, so dass alle oder zumindest ein vorgegebener Großteil aller Bildpunkte innerhalb der Grundflächenkontur liegt, wenn das bearbeitete Bild aus dem Differenzbild erzeugt wurde, oder dass die Auswerteeinrichtung dazu eingerichtet ist, die Abmessungen der Grundfläche in dem bearbeiteten Bild auf der Abmessungen der Grundfläche der Fläche einer größtmöglichen Grundflächenkontur als den die Verpackungsschale repräsentierenden Bildbereich zu ermitteln, welche die Menge von Bildpunkten von einem zentralen, bildpunktefreien Bereich trennt, so dass alle oder zumindest ein vorgegebener Großteil aller Bildpunkte außerhalb der Grundflächenkontur liegt, wenn das bearbeitete Bild aus dem Bild der Aufsicht der Verpackungsschale erzeugt wurde.

Wenn demnach das bearbeitete Bild aus dem Differenzbild erzeugt wurde, befinden sich alle oder zumindest der vorgegebene Großteil der genannten Bildpunkte in einem zentralen Bereich des bearbeiteten Bildes. Die Grundflächenkontur stellt somit eine Art Rahmen dar, welcher sozusagen der äußeren Grenze der Bildpunktemenge entspricht und welcher die Bildpunktemenge möglichst eng umschließt. Wenn das bearbeitete Bild unmittelbar aus dem Bild der Aufsicht der Verpackungsschale erzeugt wurde, d.h. ohne den Zwischenschritt einer Differenzbildermittlung, befindet sich die genannte Menge von Bildpunkten in äußeren Bereichen des bearbeiteten Bildes, während ein zentraler Bereich in dem bearbeiteten Bild zumindest im Wesentlichen frei von Bildpunkten ist. Hierfür wird die Grundflächenkontur anschaulich wiederum als ein Rahmen ermittelt, welcher die Bildpunktemenge von dem zentralen bildpunktefreien Bereich trennt, wobei hier die Größe dieses Rahmens maximiert werden soll, so dass dessen Kanten den Grenzen zwischen der Bildpunktemenge und dem bildpunktefreien Bereich entsprechen.

Vorteilhafterweise entspricht die Grundflächenkontur der Form eines Rechtecks. So kann die Grundflächenkontur exakt rechteckig sein oder auch einem Rechteck mit abgerundeten Ecken entsprechen, wobei der Eckenradius als ein absoluter oder relativer Wert bezogen auf die Größe der Grundflächenkontur vorgegeben sein kann. Bei einer Verwendung von nicht rechteckigen Verpackungsschalen wird die Form der Grundflächenkontur entsprechend an die Grundfläche des jeweiligen Schalentyps angepasst.

Die Auswerteeinrichtung ist dazu eingerichtet, die Höhe der erfassten Verpackungsschale ferner auf der Grundlage einer Lage der in einem Bild der Aufsicht ermittelten Grundflächenkontur der erfassten Verpackungsschale, insbesondere einer Lage einer der zweiten Kamera zugewandten Kante der Grundflächenkontur, zu ermitteln. Die Bildposition der Grundflächenkontur, insbesondere die Bildposition der der zweiten Kamera zugewandten Kante der Grundflächenkontur, definiert unter Berücksichtigung einer Kalibrierfunktion den Abstand der Kante der Verpackungsschale zu der zweiten Kamera. Hierdurch können Ungenauigkeiten bei der Ermittlung der Höhe der erfassten Verpackungsschale reduziert werden, da perspektivische Verzerrungen bei der Ermittlung der Höhe, die auf unterschiedlich große Verpackungsschalen oder unterschiedliche Abstände der Verpackungsschale von der zweiten Kamera zurückzuführen sind, berücksichtigt werden können. Die Lage der Grundflächenkontur bzw. die Lage der genannten der zweiten Kamera zugewandten Kante entspricht der zugeordneten Position in der Aufsicht. Bei der der zweiten Kamera zugewandten Kante der Grundflächenkontur handelt es sich insbesondere um diejenige Kante, die der zweiten Kamera am nächsten liegt und/oder im Wesentlichen parallel zu einer Bildebene der zweiten Kamera verläuft. Falls die Grundflächenkontur in Bezug auf die Bildebene der zweiten Kamera verdreht ist, d.h. die Kanten der Grundflächenkontur nicht parallel bzw. orthogonal zu der Bildebene der zweiten Kamera verlaufen, soll unter der zugewandten Kante der Grundflächenkontur diejenige Kante mit dem kleineren Neigungswinkel und dem kleineren Abstand in Bezug auf die Bildebene der zweiten Kamera verstanden werden.

Die Auswerteeinrichtung ist dazu eingerichtet, die Abmessungen der Grundfläche der erfassten Verpackungsschale auf der Grundlage von in Bildkoordinaten ermittelten Abmessungen der Grundflächenkontur der erfassten Verpackungsschale, welche Grundflächenkontur und Abmessungen in einem Bild der Aufsicht ermittelt wurden, der aus der Seitenansicht ermittelten Höhe der erfassten Verpackungsschale und zumindest einer Kennlinienfunktion zu ermitteln, welche als Funktionswert die Abmessungen der Grundfläche als Funktion der in Bildkoordinaten ermittelten Abmessungen der Grundflächenkontur und der ermittelten Höhe angibt. Bei den genannten Abmessungen der Grundfläche, welche insbesondere einer Orthogonalprojektion der Verpackungsschale entspricht, handelt es sich um die Länge und Breite der Grundfläche. Es werden also die absoluten Abmessungen, d.h. die tatsächliche Länge und Breite der Grundfläche, auf der Grundlage der in Bildkoordinaten, insbesondere in Pixelkoordinaten, ermittelten Abmessungen mit Hilfe der Kennlinienfunktion ermittelt. Bei der Kennlinienfunktion handelt es sich um eine arithmetische Funktion oder eine Tabellenfunktion bzw. um einen Satz von arithmetischen Funktionen oder Tabellenfunktionen, welche beispielsweise im Rahmen einer vorgängig durchgeführten Kalibration unter Verwendung von Verpackungsschalen unterschiedlicher Größe, deren Abmessungen bekannt sind, oder rechnerisch unter Berücksichtigung aller relevanten optischen Parameter wie die Skalierung der ersten Maßverkörperung, der Vergrößerung der ersten Kamera, dem Arbeitsabstand, d.h. dem Abstand der Verpackungsschale von der ersten Kamera, usw. ermittelt werden.

Vorteilhafterweise können in analoger Weise auch die Abmessungen der Seitenfläche, zumindest die Höhe der Seitenfläche, ermittelt werden, d.h. auf der Grundlage von Abmessungen einer Seitenflächenkontur, welche in einem Bild der Seitenansicht in entsprechender Weise durch Bildverarbeitungsschritte, welche zu den Bildverarbeitungsschritten zur Ermittlung der Abmessungen der Grundflächenkontur korrespondieren, und zumindest einer weiteren Kennlinienfunktion ermittelt werden, welche als Funktionswert die Abmessungen, zumindest die Höhe, der Seitenfläche als Funktion der in Bildkoordinaten ermittelten Abmessungen, zumindest der Höhe, der Seitenflächenkontur angibt. Als zusätzlicher Parameter für die Ermittlung der Abmessungen bzw. der Höhe der Seitenflächenkontur kann der Abstand der Verpackungsschale von der zweiten Kamera verwendet werden. Dieser Abstand kann gemäß der entsprechenden vorstehend beschriebenen vorteilhaften Ausführungsform auf der Grundlage der Lage der in dem Bild der Aufsicht ermittelten Grundflächenkontur der erfassten Verpackungsschale, insbesondere der Lage der der zweiten Kamera zugewandten Kante der Grundflächenkontur, ermittelt werden.

Die Ermittlung der Abmessungen, insbesondere der Höhe, der Seitenflächenkontur kann insbesondere das Erzeugen eines bearbeiteten Bildes eines Abbildes der Seitenflächenkontur umfassen, in welchem diejenigen Bildinformationen, welche Strukturen der zweiten Maßverkörperung repräsentieren, in Form einer Menge von Bildpunkten vorliegen, entsprechend der korrespondierenden vorstehend beschriebenen Ausführungsform, welche ein bearbeitetes Bild eines Bildes der Aufsicht bzw. eines aus der Aufsicht erzeugten Differenzbildes erzeugt.

Weitere vorteilhafte Ausgestaltungen der Erfindung ergeben sich aus den Ansprüchen, der Beschreibung und der Zeichnung.

Darüber hinaus betrifft die vorliegende Erfindung eine Verpackungsmaschine mit einem Objektvermessungssystem, wie es vorstehend beschrieben ist.

Die Erfindung wird nachfolgend anhand eines Ausführungsbeispiels mit Bezug auf die Zeichnungen beschrieben. Es zeigen:
- Fig. 1: eine schematische Seitenansicht eines Objektvermessungssystems gemäß einem Ausführungsbeispiel;
- Fig. 2: ein von einer ersten Kamera des Objektvermessungssystems gemäß Fig. 1 erzeugtes, als Referenzbild dienendes Bild einer ersten Maßverkörperung;
- Fig. 3: ein Bild einer Aufsicht einer Verpackungsschale einschließlich der nicht durch die Verpackungsschale verdeckten Bereiche der ersten Maßverkörperung;
- Fig. 4: ein aus den Bildern gemäß Fig. 2 und 3 erzeugtes Differenzbild;
- Fig. 5 bis 7: aus dem Differenzbild gemäß Fig. 4 durch Anwendung verschiedener Bildverarbeitungsschritte erzeugte bearbeitete Bilder;
- Fig. 8: aus dem Bild der Aufsicht der Verpackungsschale gemäß Fig. 3 durch Anwendung verschiedener Bildverarbeitungsschritte erzeugtes weiteres bearbeitetes Bild;
- Fig. 9: das Bild gemäß Fig. 3 mit einer zusätzlich eingezeichneten Grundflächenkontur der Verpackungsschale;
- Fig. 10: ein von einer zweiten Kamera erzeugtes Bild einer Seitenansicht einer Verpackungsschale einschließlich eines in der Verpackungsschale aufgenommenen Verpackungsguts und einer Markierung einer Seitenfläche der Verpackungsschale;
- Fig. 11: das Bild der Seitenansicht der Verpackungsschale gemäß Fig. 10, jedoch ohne die Markierung der Seitenfläche der Verpackungsschale;
- Fig. 12: ein aus dem Bild der Seitenansicht der Verpackungsschale gemäß Fig. 11 und einem nicht dargestellten, hierzu korrespondierenden Referenzbild erzeugtes Differenzbild;
- Fig. 13: ein aus dem Bild gemäß Fig. 12 durch Anwendung verschiedener Bildverarbeitungsschritte erzeugtes weiteres bearbeitetes Bild;
- Fig. 14: eine auf der Grundlage eines regelmäßigen Musters und einer Verzerrungsfunktion erzeugte alternative erste Maßverkörperung; und
- Fig. 15: ein von der ersten Kamera erzeugtes Bild einer Aufsicht der ersten Maßverkörperung gemäß Fig. 14.

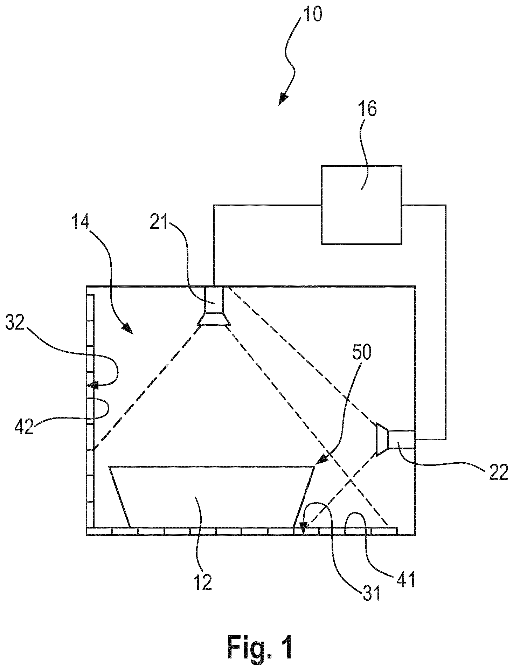

Fig. 1 zeigt in schematischer Ansicht ein beispielhaftes Objektvermessungssystem 10 für eine nicht dargestellte Verpackungsmaschine, welche zum Umwickeln von Verpackungsschalen, insbesondere einschließlich eines Verpackungsguts, insbesondere eines Lebensmittelprodukts, mit einer Folie eingerichtet ist. Das Objektvermessungssystem 10 kann mit der Verpackungsmaschine verbunden oder in diese integriert sein.

Das Objektvermessungssystem 10 weist einen Aufnahmeraum 14 für eine zu vermessende Verpackungsschale 12 auf. Der Aufnahmeraum 14 weist eine quaderförmige Gestalt auf und kann an mehreren, insbesondere allen Seitenflächen insbesondere lichtdichte Begrenzungsflächen aufweisen. Die Begrenzungsflächen können erforderlichenfalls Öffnungen, welche für einen Transport einer zu vermessenden Verpackungsschale in den und aus dem Aufnahmeraum 14 notwendig sind, Wartungsöffnungen für Entstörungs- oder Reinigungsarbeiten und/oder Beobachtungsöffnungen insbesondere für Kameras und/oder Bedienpersonen aufweisen.

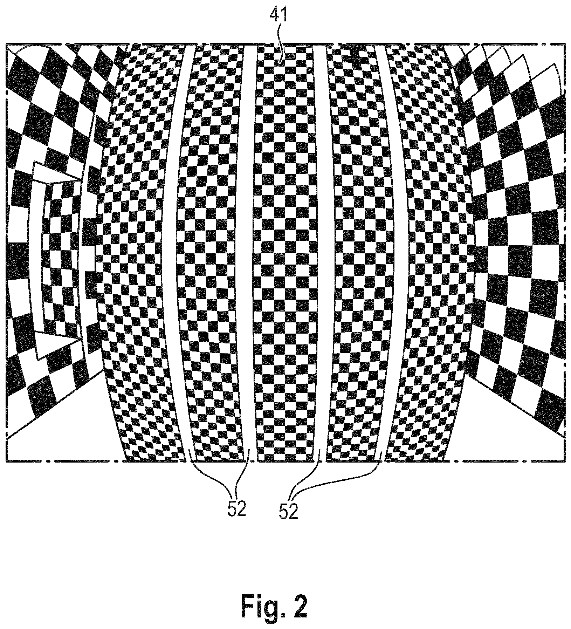

Eine erste Begrenzungsfläche 31 stellt eine Bodenfläche des Aufnahmeraums 14 dar und ist mit einer durch ein Muster gebildeten ersten zweidimensionalen Maßverkörperung 41 versehen. Im Bereich der ersten Begrenzungsfläche 31 können ferner Fördermittel 52 (vgl. Fig. 2), beispielsweise Förderbänder vorgesehen sein, welche eine zu vermessende Verpackungsschale 12 in den und aus dem Aufnahmeraum 14 transportieren. Bei den Fördermitteln 52 handelt es sich insbesondere um ein Zuführband, mit dem die Verpackungsschalen der Verpackungsmaschine, beispielsweise einer Hebeeinrichtung, wie sie eingangs genannt ist, zugeführt werden.

Eine Seitenfläche des Aufnahmeraums 14 stellt eine zweite Begrenzungsfläche 32 des Aufnahmeraums 14 dar, an welcher eine durch ein Muster gebildete zweite zweidimensionale Maßverkörperung 42 angeordnet ist. Im Ausführungsbeispiel verlaufen die Begrenzungsflächen 31, 32 bzw. die darauf angeordneten Maßverkörperungen 41, 42 orthogonal zueinander. Die Maßverkörperungen 31, 41 sind im vorliegenden Ausführungsbeispiel als jeweilige Schachbrettmuster ausgestaltet, bei dem sich weiße und schwarze Quadrate sowohl horizontal als auch vertikal abwechseln. Die Rastermaße der Maßverkörperungen 41, 42 können sich voneinander unterscheiden.

Gegenüberliegend der ersten Begrenzungsfläche 31 ist eine erste Kamera 21 angeordnet, welche dazu eingerichtet ist, ein Bild einer Aufsicht, insbesondere als Farbbild, zu erzeugen, welches neben einem Abbild der Verpackungsschale 12 auch ein Abbild von erfassten, nicht durch die Verpackungsschale verdeckten Bereichen der ersten Maßverkörperung 41 umfasst.

Gegenüberliegend der zweiten Begrenzungsfläche 32 ist eine zweite Kamera 22 angeordnet, welche dazu eingerichtet ist, ein Bild einer Seitenansicht, insbesondere als Farbbild, zu erzeugen, wobei die Seitenansicht neben einem Abbild der zu vermessenden Verpackungsschale 12 auch ein Abbild von erfassten, nicht durch die Verpackungsschale 12 verdeckten Bereichen der zweiten Maßverkörperung 42 umfasst.

Vorteilhafterweise verläuft die Bildebene einer jeweiligen Kamera 21, 22 parallel zu der durch diese Kamera 21, 22 erfassbaren Maßverkörperung 41, 42.

Die hier nur beispielhaft dargestellte Verpackungsschale 12 weist einen Boden und eine umlaufende Wandung auf und ist nach oben hin offen. Die Wandung ist im Ausführungsbeispiel gegenüber dem Boden leicht nach außen geneigt, so dass eine Grundfläche der Verpackungsschale, welche sich aus einer Orthogonalprojektion der Verpackungsschale 12 auf die Begrenzungsfläche 31 ergibt, etwas größer ist als die eigentliche Bodenfläche der Verpackungsschale 12. Die Grundfläche der Verpackungsschale 12 entspricht der Form eines Rechtecks, wobei die Ecken der Grundfläche abgerundet sein können. Die obenliegende Öffnung der Verpackungsschale 12 ist von jeweiligen Kanten der umlaufenden Wandung umgrenzt, wobei eine der zweiten Kamera 22 zugewandte Kante mit dem Bezugszeichen 50 gekennzeichnet ist.

Die Kameras 21, 22 sind im Ausführungsbeispiel im Inneren des Aufnahmeraums 14 angeordnet. Gemäß einer Abwandlung können diese auch außerhalb des Aufnahmeraums 14 vorgesehen sein, wobei in dem Fall entsprechende Lichtdurchtrittsöffnungen oder Fenster in den entsprechenden Begrenzungsflächen des Aufnahmeraums 14 vorgesehen sein können. Im Aufnahmeraum 14 können ferner auch Beleuchtungseinrichtungen (nicht dargestellt) vorgesehen sein.

Das Objektvermessungssystem 10 umfasst ferner eine mit den Kameras 21, 22 verbundene Auswerteeinrichtung 16 zum Auswerten der von den Kameras 21, 22 aufgenommenen Bildern. Die Auswerteeinrichtung 16 führt insbesondere die nachfolgend beschriebenen Auswerte- und Bildverarbeitungsschritte aus und kann ferner auch Steuerungsaufgaben übernehmen, beispielsweise die Kameras 21, 22 zur jeweiligen Bildaufnahme ansteuern. Ferner kann die Auswerteeinrichtung 16 mit der Verpackungsmaschine bzw. einer Steuereinrichtung der Verpackungsmaschine verbunden sein, um einerseits Daten wie Steuerbefehle von der Verpackungsmaschine zu empfangen und andererseits Daten wie Ergebnisse einer durchgeführten Objektvermessung oder Steuerbefehle an die Verpackungsmaschine zu übermitteln.

Nachfolgend wird die Funktionsweise des erfindungsgemäßen Objektvermessungssystems 10 mit Bezug auf Fig. 2 bis 15 näher beschrieben.

Zunächst wird vorgängig zu einem Vermessungsvorgang ein Referenzbild (Fig. 2), welches im Wesentlichen ein Abbild der ersten Maßverkörperung 41 umfasst, mittels der ersten Kamera 21 erzeugt und in der Auswerteeinrichtung 16 gespeichert. Zusätzlich miterfasste Bereiche der zweiten Maßverkörperung 42 können bei nachfolgenden Auswerteschritten außer Betracht bleiben.

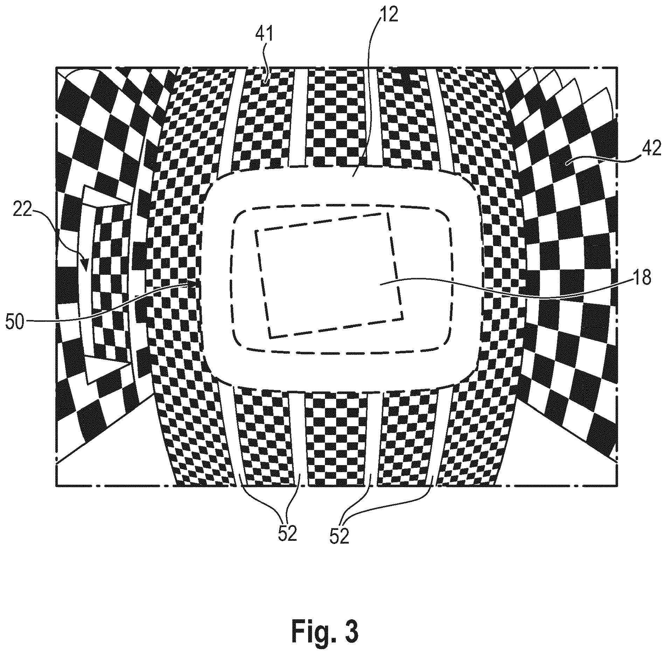

Fig. 3 zeigt ein aus derselben Aufsichtsperspektive wie in Fig. 2 erzeugtes Bild, welches neben einem Abbild einer im Aufnahmeraum 14 angeordneten Verpackungsschale 12 auch ein Abbild von erfassten, nicht durch die Verpackungsschale 12 verdeckten Bereichen der ersten Maßverkörperung 41 umfasst. In der Verpackungsschale 12 ist ein beispielhaftes, schachtelartiges Verpackungsgut 18 angeordnet, dessen Farbe in dem gewählten Beispiel in etwa der Farbe der Verpackungsschale 12 entspricht, was jedoch nicht zwingend ist. Ferner sind in Fig. 2 und 3 die mehreren Fördermittel 52 erkennbar, welche dem Transport der Verpackungsschale 12 dienen.

Zunächst wird in zumindest einem nicht dargestellten Zwischenschritt eine Umwandlung der Farbbilder gemäß Fig. 2 und 3 in entsprechende Grauwert- oder Schwarzweißbilder durchgeführt.

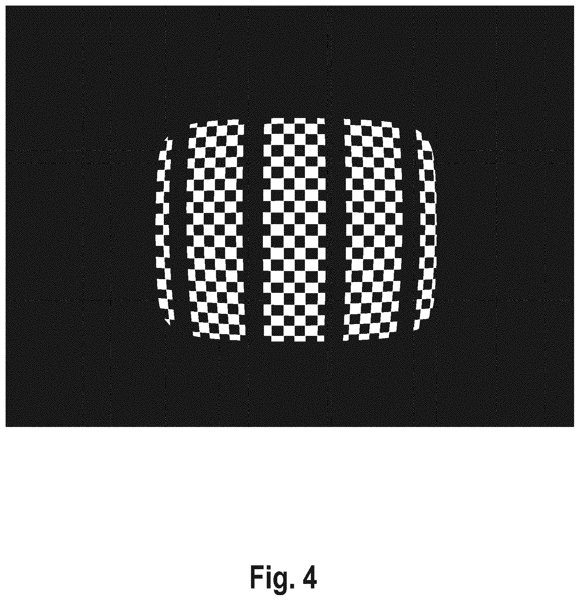

Aus dem Bild der Aufsicht (Fig. 3) und dem Referenzbild (Fig. 2) wird ein Differenzbild (Fig. 4) erzeugt. Wie gut zu erkennen ist, heben sich die in beiden Bildern identischen Bildbestandteile, nämlich die nicht verdeckten Bereiche der ersten Maßverkörperung 41 gegenseitig auf, so dass in einem zentralen Bildbereich Bildinformationen vorliegen, welche eine Überlagerung eines Abbildes der Maßverkörperung und eines Abbildes der Verpackungsschale umfassen. Das Differenzbild gemäß Fig. 4 wurde bereits einem oder mehreren Bildverarbeitungsschritten unterzogen, welche eine Erhöhung der Bildschärfe bewirken. Diese Bildverarbeitungsschritte umfassen insbesondere die Anwendung eines Gaußfilters.

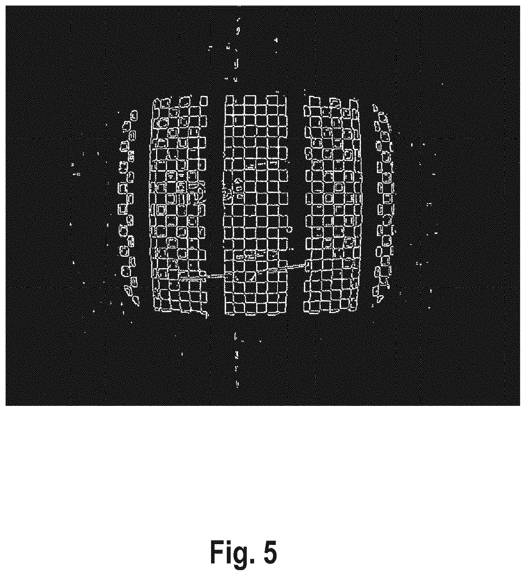

Das Bild gemäß Fig. 4 wird einem oder mehreren weiteren Bildbearbeitungsschritten zur Kantendetektion unterzogen, deren Ergebnis in Fig. 5 dargestellt ist. Anstelle des Schachbrettmusters mit den abwechselnd angeordneten schwarzen und weißen Quadraten ist nunmehr ein Kanten- oder Linienmuster vorhanden, wobei die Linien den Übergängen zwischen den schwarzen und weißen Quadraten bzw. anderen entsprechend kontrastierten Bildbereichen entsprechen. Zur Durchführung dieser Kantendetektion kann beispielsweise ein sogenannter Canny-Algorithmus angewendet werden. Canny-Algorithmen sind allgemein bekannt und können mehrere Faltungsoperationen und andere Operationen wie Rauschunterdrückung, Sobel- und/oder Laplace-Transformationen, eine sogenannte "non-maximum suppression" und ein Hystereseverfahren mit einem oder mehreren Schwellwerten umfassen.

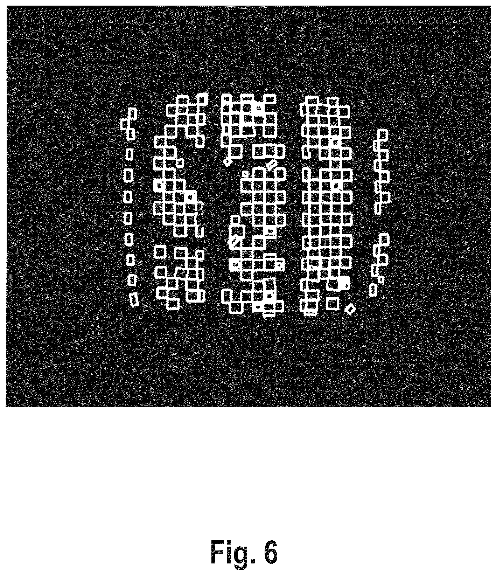

Mittels eines weiteren Bildbearbeitungsschritts werden ausgehend von dem Bild gemäß Fig. 5 Rechtecke einer bestimmten Größe gesucht. Das daraus resultierende weitere bearbeitete Bild ist in Fig. 6 dargestellt.

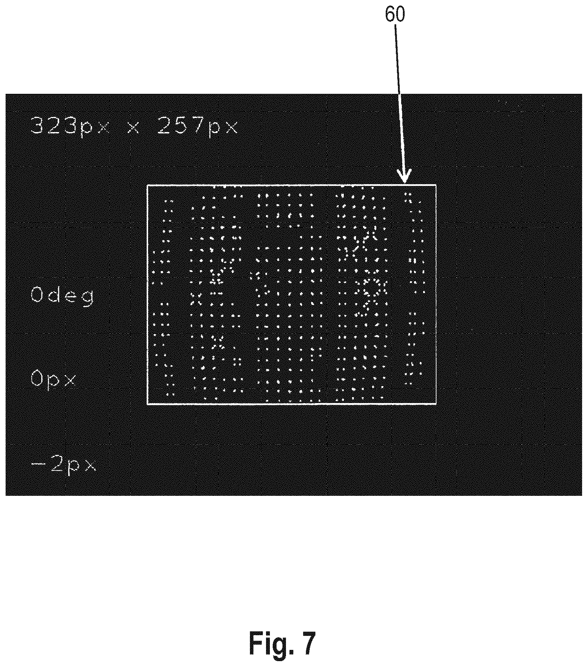

In einem weiteren Bildbearbeitungsschritt, dessen Ergebnis in Fig. 7 dargestellt ist, werden die Eckpunkte der vorgängig ermittelten Rechtecke extrahiert. Diese Eckpunkte repräsentieren somit Strukturen der ersten Maßverkörperung 41 in Form einer Menge von Bildpunkten, welche in der Regel weniger als zehn Pixel, bevorzugt weniger als fünf Pixel und insbesondere nur ein Pixel umfassen.

In einem weiteren Bearbeitungsschritt wird eine kleinstmögliche Grundflächenkontur 60 ermittelt, welche die Menge von Bildpunkten umgrenzt, so dass alle oder zumindest ein vorgegebener Großteil aller Bildpunkte innerhalb der Grundflächenkontur 60 liegt, wobei der genannte vorgegebene Großteil der Bildpunkte beispielsweise derart definiert werden kann, dass die relative Anzahl der Bildpunkte, die sich innerhalb der Grundflächenkontur 60 befinden, oberhalb eines vorgegebenen Schwellenwerts von beispielsweise 95, 98 oder 99% liegen muss. Dies kann beispielsweise in einem iterativen Verfahren ermittelt werden. Es erfolgt sozusagen ein Fit oder Anpassen einer Grundflächenkontur 60 an die Menge der Bildpunkte. Als Ausgangswert für die Grundflächenkontur 60 wird ein entsprechend der Form der Verpackungsschale gewählte Kontur ausgewählt, beispielsweise ein Rechteck oder auch ein Rechteck mit abgerundeten Ecken. Bei einer exakt rechteckigen Grundflächenkontur 60 kann eine Abrundung der Ecken der ermittelten Kontur auch im Nachhinein erfolgen.

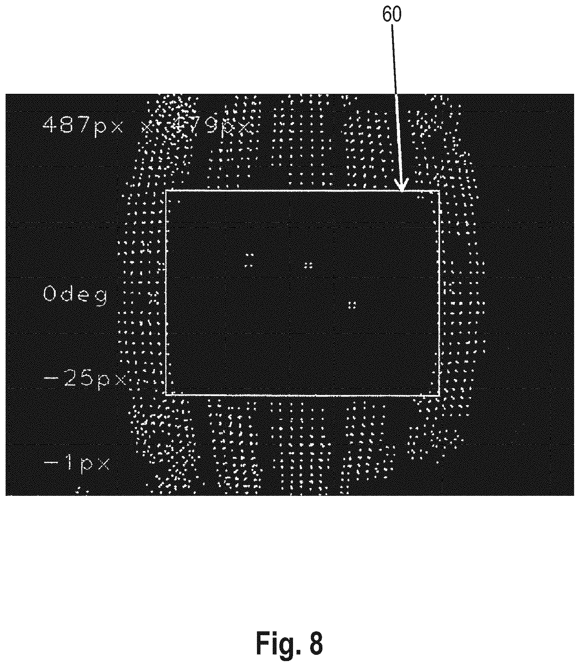

Eine alternative Möglichkeit zur Ermittlung einer Grundflächenkontur 60 wird nachfolgend mit Bezug auf Fig. 8 beschrieben. Hierfür wird als Ausgangsbild nicht ein Differenzbild (Fig. 4) herangezogen, sondern das Bild der Aufsicht der Verpackungsschale 12 gemäß Fig. 3. Auf dieses Ausgangsbild werden die mit Bezug auf Fig. 5 bis 7 beschriebenen Bildbearbeitungsschritte in entsprechender Weise angewendet. Im Unterschied zu den mit Bezug auf Fig. 7 beschriebenen Auswertungsschritten wird jedoch die Grundflächenkontur 60 auf der Grundlage einer größtmöglichen Grundflächenkontur 60 als den die Verpackungsschale 12 repräsentierenden Bildbereich ermittelt, welche die sich in äußeren Bildbereichen befindende Menge von Bildpunkten von einem zentralen, im Wesentlichen bildpunktefreien Bereich trennt, so dass alle oder zumindest ein vorgegebener Großteil aller Bildpunkte außerhalb der Grundflächenkontur 60 liegt. Der vorgegebene Großteil kann wie vorstehend beschrieben definiert werden.

In Fig. 7 und 8 ist die Größe der jeweiligen Grundflächenkontur 60 in Bildkoordinaten (Pixel; px) angegeben.

Die Grundflächenkontur 60 (Fig. 7 bzw. 8) repräsentiert somit die Grundfläche der Verpackungsschale 12. Die Abmessungen dieser Grundfläche, d.h. die Länge und die Breite der Grundfläche, können auf der Grundlage der in Bildkoordinaten ermittelten Abmessung der Grundflächenkontur 60, der Höhe der Verpackungsschale und einer bzw. einem Satz von Kennlinienfunktionen ermittelt werden, welche als Funktionswert absolute Abmessungen der Grundfläche als Funktion der in Bildkoordinaten ermittelten Abmessung der Grundflächenkontur 60 und der ermittelten Höhe angibt. Der oder die Kennlinienfunktionen können in einem vorgängigen Kalibrationsschritt unter Verwendung von Verpackungsschalen 12 unterschiedlicher Größe, deren Abmessungen bekannt sind, oder rechnerisch unter Berücksichtigung aller relevanten optischen Parameter des Objekterfassungssystems 10 ermittelt werden. Die Kennlinienfunktionen können in Form von arithmetischen Funktionen oder Tabellenfunktionen in der Auswerteeinrichtung 16 gespeichert werden.

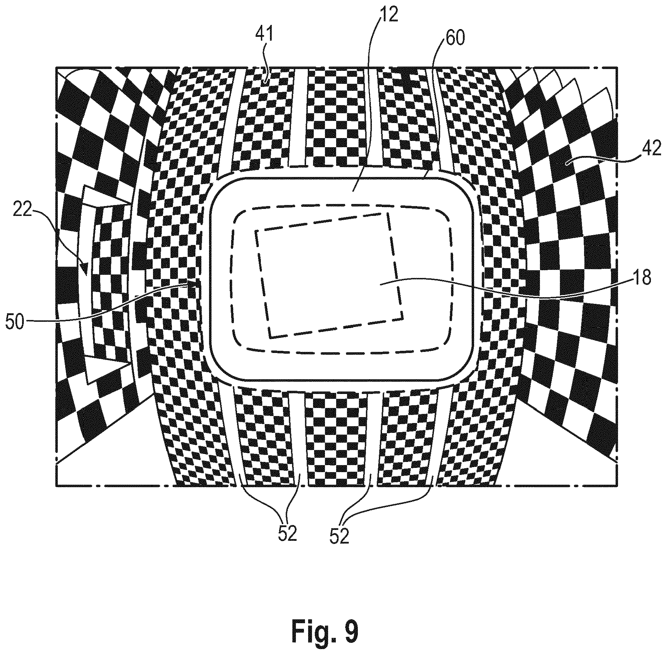

Bevor die realen Abmessungen der Grundfläche der Verpackungsschale 12 ermittelt bzw. errechnet werden können, ist es erforderlich, zunächst die Höhe der Verpackungsschale 12 zu ermitteln. Hierfür wird die Grundflächenkontur 60 dem Farbbild der Aufsicht der Verpackungsschale gemäß Fig. 3 überlagert, wie es in Fig. 9 dargestellt ist. Gegebenenfalls kann die Grundflächenkontur 60 vorgängig um ein bestimmtes Maß verkleinert werden, um auszuschließen, dass die Grundflächenkontur 60 fälschlicherweise Bildbereiche umschließt, welche nicht der Verpackungsschale 12 zuzuordnen sind (beispielsweise aufgrund von Auswertefehlern). In dem Farbbild der Aufsicht wird ein Farbwert (ggf. als Mittelwert) für den von der gegebenenfalls reduzierten Grundflächenkontur 60 umgrenzten Bereich ermittelt.

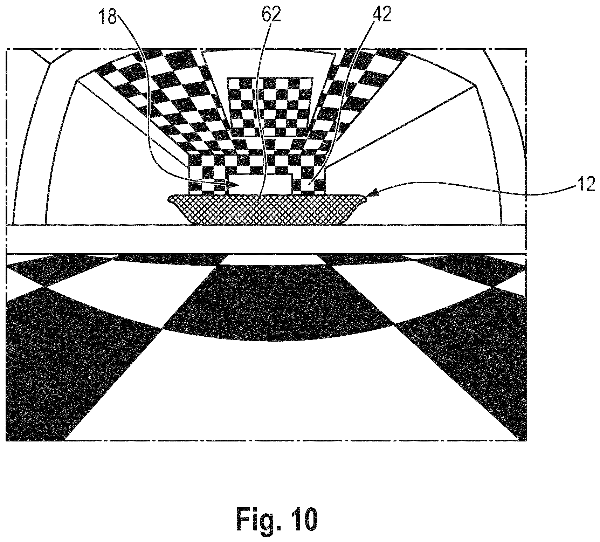

In dem Farbbild der Seitenansicht, auf dessen Grundlage das Bild der Seitenansicht gemäß Fig. 10 erzeugt wurde, wird ein der Seitenfläche der erfassten Verpackungsschale 12 entsprechender Bildbereich oder Seitenflächen-Bildbereich 62 auswählt, welcher einen zu dem ermittelten Farbwert korrespondierenden Farbwert aufweist. Um die Auswahlgenauigkeit zu verbessern, kann bei der Auswahl des korrespondierenden Farbwerts der vorgängig ermittelte Farbwert einschließlich eines vorgegebenen Toleranzbereichs heranzogen werden. Hierbei wird ausgenutzt, dass die Verpackungsschalen 12 in der Regel eine homogene Farbgebung aufweisen. In Fig. 10 ist der derart ausgewählte Seitenflächen-Bildbereich 62 durch einen entsprechenden Grauwertbereich gekennzeichnet.

Die Höhe der Verpackungsschale 12 kann auf der Grundlage der Höhe dieses Seitenflächen-Bildbereichs 62 ermittelt werden, wobei wiederum eine oder mehrere Kennlinienfunktionen verwendet werden können, welche die Höhe des Seitenflächen-Bildbereichs 62 in Bildkoordinaten in die tatsächliche Höhe der Verpackungsschale umrechnen. Zur Durchführung dieser Umrechnung kann vorteilhafterweise als weiterer Parameter zusätzlich der Abstand der Verpackungsschale 12 von der zweiten Kamera 22 herangezogen werden. Als Bezugspunkt für den Abstand kann die der zweiten Kamera 21 zugewandte Kante 50 der Verpackungsschale 12 (Fig. 1) gewählt werden. Dieser Abstand lässt sich zumindest näherungsweise aus der Lage der Grundflächenkontur 60 in den bearbeiteten Bildern der Aufsicht ermitteln (Fig. 7 und 8).

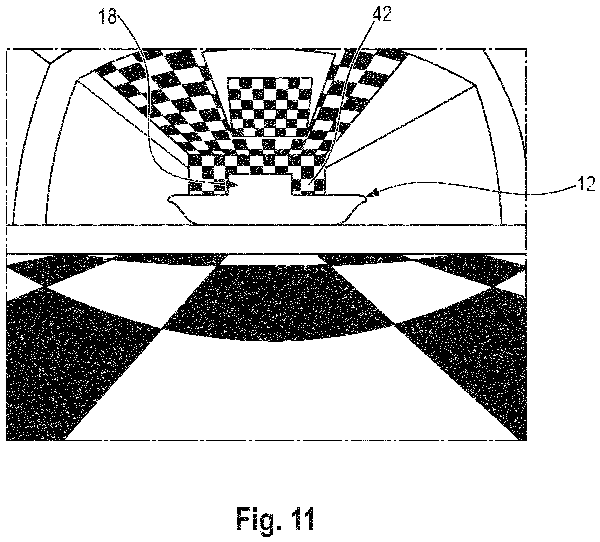

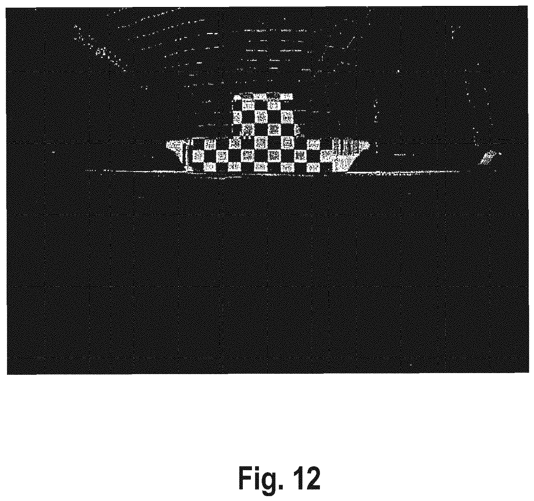

Die Ermittlung der Gesamthöhe der Verpackungsschale 12 einschließlich des darin aufgenommenen Verpackungsguts 18 wird nun mit Bezug auf Fig. 11 bis 13 näher erläutert. Die Vorgehensweise entspricht hier der mit Bezug auf Fig. 2 bis 8 erläuterten Vorgehensweise. Aus einem Abbild der Seitenansicht (Fig. 11) wird durch Bildung der Differenz mit einem nicht dargestellten Referenzbild, welches aus derselben Perspektive wie das Abbild der Seitenansicht aufgenommen wurde und welches im Wesentlichen die zweite Maßverkörperung 42 zeigt, ein Differenzbild (Fig. 12) erzeugt. Aus diesem Differenzbild wird durch die entsprechende Anwendung der vorstehend erläuterten Bildverarbeitungsschritte ein bearbeitetes Bild erzeugt, in welchem diejenigen Bildinformationen, welche Strukturen der zweiten Maßverkörperung 42 repräsentieren, in Form einer Menge von Bildpunkten vorliegen. Diese Menge von Bildpunkten liegt in einem Bildbereich, welcher der Seitenfläche der Verpackungsschale 12 einschließlich des darin aufgenommenen Verpackungsguts 18 entspricht. An diese Bildpunktemenge kann wiederum eine Seitenflächenkontur als Einhüllende angepasst werden. Aus dieser Seitenflächenkontur kann schließlich die Gesamthöhe der Verpackungsschale 12 einschließlich des Verpackungsguts 18 ermittelt werden.

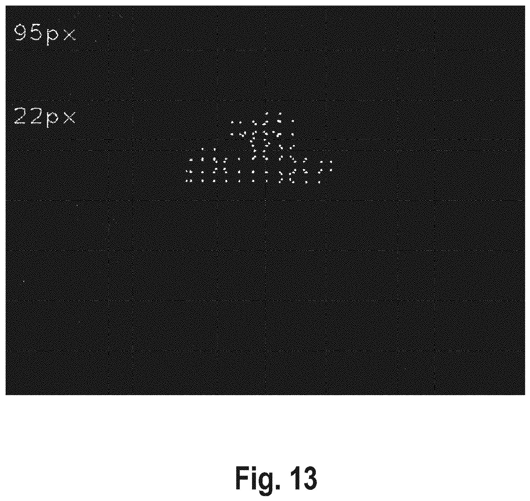

Gemäß einer Abwandlung kann aus dem bearbeiteten Bild gemäß Fig. 13 auch die Höhe der Verpackungsschale 12 selbst (d.h. ohne das Verpackungsgut 18) ermittelt werden, wenn in dem Bild eine Differenzierung nach Verpackungsgut 18 und Verpackungsschale 12 z.B. aufgrund unterschiedlicher Breite oder unterschiedlicher Farbwerte möglich ist, oder wenn das Verpackungsgut 18 ohnehin nicht über die Verpackungsschale 12 hervorsteht.

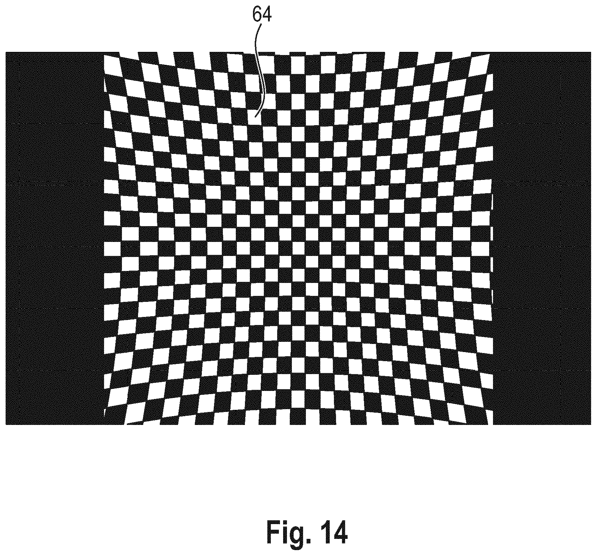

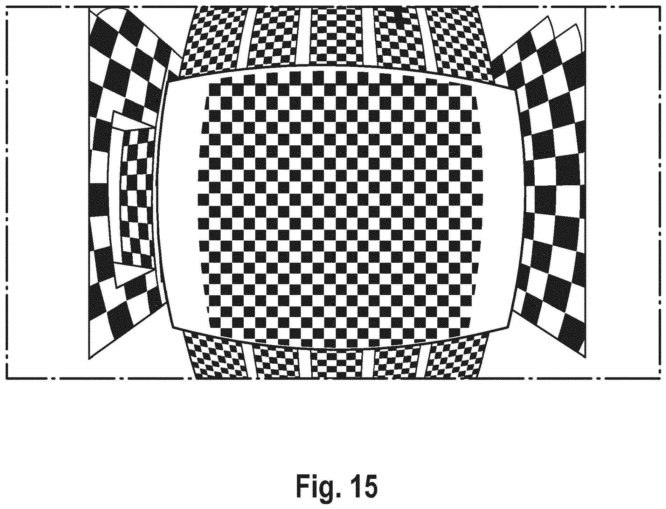

Mit Bezug auf Fig. 14 und 15 wird nun eine Abwandlung beschrieben, bei welcher eine verbesserte Maßverkörperung zur Anwendung kommt. Wie in Fig. 2 zu erkennen ist, weist das Abbild der ersten Maßverkörperung 41 deutliche Verzerrungen auf, welche auf Verzeichnungen eines Objektivs der ersten Kamera 21 zurückzuführen sind. Derartige Verzeichnungen sind charakteristisch für sehr kurzbrennweitige Weitwinkelobjektive und lassen sich nur teilweise und/oder mit einem sehr hohen Aufwand vermeiden.

Um eine möglichst maßstabsgetreue Wiedergabe der ersten bzw. der zweiten Maßverkörperung 41, 42 in den jeweiligen Abbildern über den gesamten Bildbereich zu erzielen, kann eine alternative Maßverkörperung 64 (Fig. 14) eingesetzt werden, welche auf der Grundlage eines regelmäßigen Schachbrettmusters und einer Verzerrungsfunktion erzeugt ist, wobei die Verzerrungsfunktion derart gewählt ist, dass diese optischen Verzeichnungen, welche durch ein Objektiv der die jeweilige Maßverkörperung 41, 42 erfassenden Kamera 21, 22 erzeugt werden, entgegenwirkt. Fig. 15, welche in ihrer Perspektive dem Referenzbild von Fig. 2 entspricht, zeigt ein Abbild der alternativen Maßverkörperung 64, welche anstelle einer Verpackungsschale in den Aufnahmeraum 14 eingebracht wurde. Die ursprünglich rechteckige alternative Maßverkörperung 64 ist hier kissenförmig verzerrt. Aufgrund der entgegenwirkenden Verzerrungsfunktion erscheint jedoch das Schachbrettmuster in dem Abbild als ein verzeichnungsfreies äquidistantes Muster.

Eine jeweilige, auf die betreffende Kamera 21, 22 angepasste alternative Maßverkörperung 64 kann somit sowohl die erste Maßverkörperung 41 als auch die zweite Maßverkörperung 42 ersetzen, gegebenenfalls mit verändertem Maßstab oder Teilungsmaß.

### Bezugszeichenliste

- 10: Objektvermessungssystem
- 12: Verpackungsschale
- 14: Aufnahmeraum
- 16: Auswerteeinrichtung
- 18: Verpackungsgut
- 21: erste Kamera
- 22: zweite Kamera
- 31: erste Begrenzungsfläche
- 32: zweite Begrenzungsfläche
- 41: erste Maßverkörperung
- 42: zweite Maßverkörperung
- 50: Kante
- 52: Fördermittel
- 60: Grundflächenkontur
- 62: Seitenflächen-Bildbereich
- 64: alternative Maßverkörperung

## Patentansprüche

1. Objektvermessungssystem (10) für eine Verpackungsmaschine, welche zum Umwickeln von Verpackungsschalen (12) mit einer Folie eingerichtet ist, zum Ermitteln der Abmessungen einer Grundfläche und einer Höhe einer zu umwickelnden Verpackungsschale (12), mit:
einem Aufnahmeraum (14) für die Verpackungsschale (12),
einer ersten und einer zweiten Kamera (21, 22) zum Aufnehmen von elektronischen Bildern, nämlich Farbbildern, einer jeweiligen im Aufnahmeraum (14) angeordneten Verpackungsschale (12), wobei die erste und die zweite Kamera (21, 22) derart zueinander und in Bezug auf den Aufnahmeraum (14) angeordnet sind, dass die Erfassungsrichtungen der beiden Kameras (21, 22) quer, insbesondere orthogonal, zueinander verlaufen, und dass die erste Kamera (21) eine Aufsicht der Verpackungsschale (12) und die zweite Kamera (22) eine Seitenansicht der Verpackungsschale (12) erfasst, und
einer mit den Kameras (21, 22) verbundenen Auswerteeinrichtung (16) zum Auswerten der von den Kameras (21, 22) aufgenommenen Bilder der Verpackungsschale (12),
**dadurch gekennzeichnet, dass**
die Auswerteeinrichtung (16) dazu eingerichtet ist,
- in einem Farbbild der Aufsicht eine Grundflächenkontur (60) der erfassten Verpackungsschale (12) zu ermitteln,
- in dem Farbbild der Aufsicht einen Farbwert für den von der Grundflächenkontur (60) umgrenzten Bereich zu ermitteln,
- auf der Grundlage des ermittelten Farbwerts in dem Farbbild der Seitenansicht einen der Seitenfläche der erfassten Verpackungsschale (12) entsprechenden Bildbereich auszuwählen, welcher einen zu dem ermittelten Farbwert korrespondierenden Farbwert aufweist,
- auf der Grundlage des ausgewählten, der Seitenfläche entsprechenden Bildbereichs die Höhe der erfassten Verpackungsschale (12) zu ermitteln, und
- auf der Grundlage der ermittelten Grundflächenkontur (60) die Abmessungen der Grundfläche der erfassten Verpackungsschale (12) zu ermitteln,
wobei die Auswerteeinrichtung (16) dazu eingerichtet ist, die Höhe der erfassten Verpackungsschale (12) ferner auf der Grundlage einer Lage der in einem Bild der Aufsicht ermittelten Grundflächenkontur (60) der erfassten Verpackungsschale (12), insbesondere einer Lage einer der zweiten Kamera (22) zugewandten Kante (50) der Grundflächenkontur (60), zu ermitteln, und
wobei die Auswerteeinrichtung (16) dazu eingerichtet ist, die Abmessungen der Grundfläche der erfassten Verpackungsschale (12) auf der Grundlage von in Bildkoordinaten ermittelten Abmessungen der Grundflächenkontur (60) der erfassten Verpackungsschale (12), welche Grundflächenkontur (60) und Abmessungen in einem Bild der Aufsicht ermittelt wurden, der aus der Seitenansicht ermittelten Höhe der erfassten Verpackungsschale (12) und zumindest einer Kennlinienfunktion zu ermitteln, welche als Funktionswert die Abmessungen der Grundfläche als Funktion der in Bildkoordinaten ermittelten Abmessungen der Grundflächenkontur (60) und der ermittelten Höhe angibt.

2. Objektvermessungssystem (10) nach Anspruch 1,
**dadurch gekennzeichnet,**
**dass** der Aufnahmeraum (14) zumindest eine erste, der ersten Kamera (21) gegenüberliegende Begrenzungsfläche (31) umfasst, welche zumindest in einem von der ersten Kamera (21) erfassbaren Teilbereich eine durch ein Muster gebildete erste zweidimensionale Maßverkörperung (41) aufweist, wobei die Aufsicht neben einem Abbild der Verpackungsschale (12) auch ein Abbild von erfassten, nicht durch die Verpackungsschale (12) verdeckten Bereichen der ersten Maßverkörperung (41, 42) umfasst, wobei die Auswerteeinrichtung (16) dazu eingerichtet ist, auf der Grundlage des in der Aufsicht erfassten Bereichs der ersten Maßverkörperung (41) die Abmessungen der Grundfläche der erfassten Verpackungsschale (12) zu ermitteln.

3. Objektvermessungssystem (10) nach Anspruch 2,
**dadurch gekennzeichnet,**
**dass** der Aufnahmeraum (14) ferner eine zweite, der zweiten Kamera (22) gegenüberliegende Begrenzungsfläche (32) umfasst, welche jeweils zumindest in einem von der zweiten Kamera (22) erfassbaren Teilbereich eine durch ein Muster gebildete zweite zweidimensionale Maßverkörperung (42) aufweist, wobei die Seitenansicht neben einem Abbild der Verpackungsschale (12), insbesondere einschließlich eines gegebenenfalls in der Verpackungsschale (12) aufgenommenen Verpackungsguts (18), auch ein Abbild von erfassten, nicht durch die Verpackungsschale (12), insbesondere einschließlich des gegebenenfalls in der Verpackungsschale (12) aufgenommenen Verpackungsguts (18), verdeckten Bereichen der zweiten Maßverkörperung (42) umfasst, wobei die Auswerteeinrichtung (16) dazu eingerichtet ist, auf der Grundlage des in der Seitenansicht erfassten Bereichs der zweiten Maßverkörperung (42) zumindest eine Abmessung einer Seitenfläche der erfassten Verpackungsschale (12), insbesondere einschließlich des gegebenenfalls in der Verpackungsschale (12) aufgenommenen Verpackungsguts (18), zu ermitteln, wobei die zumindest eine Abmessung der Seitenfläche die Höhe der Seitenfläche der erfassten Verpackungsschale (12) und/oder eine Gesamthöhe der Seitenfläche der erfassten Verpackungsschale (12) einschließlich des gegebenenfalls in der Verpackungsschale (12) aufgenommenen Verpackungsguts (18) umfasst.

4. Objektvermessungssystem (10) nach Anspruch 2 oder 3,
**dadurch gekennzeichnet,**
**dass** das Muster, welches die erste Maßverkörperung (41) bildet, und/oder ein Muster, welches eine zweite Maßverkörperung (41) bildet, auf der Grundlage eines Schachbrettmusters erzeugt ist.

5. Objektvermessungssystem (10) nach einem der Ansprüche 2 bis 4,
**dadurch gekennzeichnet,**
**dass** das Muster, welches die erste Maßverkörperung (41) bildet und/oder ein Muster, welches eine zweite Maßverkörperung (42) bildet, auf der Grundlage eines regelmäßigen Musters und einer Verzerrungsfunktion erzeugt ist, wobei die Verzerrungsfunktion derart gewählt ist, dass die Verzerrungsfunktion optischen Verzeichnungen, welche durch ein Objektiv der die jeweilige Maßverkörperung (41, 42, 64) erfassenden Kamera (21, 22) erzeugt werden, entgegenwirkt.

6. Objektvermessungssystem (10) nach einem der Ansprüche 2 bis 5,
**dadurch gekennzeichnet,**
**dass** die Auswerteeinrichtung (16) dazu eingerichtet ist, aus einem Bild, insbesondere einem aus einem Farbbild hervorgegangenen Grauwertbild, der Aufsicht der Verpackungsschale (12) einschließlich der nicht durch die Verpackungsschale (12) verdeckten Bereiche der ersten Maßverkörperung (41) oder einem Differenzbild, welches durch eine Differenz des Bildes der Aufsicht der Verpackungsschale (12) und einem Referenzbild, insbesondere einem aus einem Farbreferenzbild hervorgegangenen Grauwertreferenzbild, der unverdeckten ersten Maßverkörperung (41) gebildet ist, durch Anwendung zumindest eines Bildverarbeitungsschritts ein bearbeitetes Bild zu erzeugen, in welchem diejenigen Bildinformationen, welche Strukturen der ersten Maßverkörperung (41) repräsentieren, in Form einer Menge von Bildpunkten vorliegen,
wobei bevorzugt der zumindest eine Bildverarbeitungsschritt aus einer Gruppe ausgewählt ist, welche eine Bildschärfeerhöhung, eine Kantendetektion, eine Rauschunterdrückung, eine Detektion von Rechtecken und eine Detektion von Eckpunkten der detektierten Rechtecke umfasst.

7. Objektvermessungssystem (10) nach Anspruch 6,
**dadurch gekennzeichnet,**
**dass** die Auswerteeinrichtung (16) dazu eingerichtet ist, die Abmessungen der Grundfläche in dem bearbeiteten Bild auf der Grundlage der Fläche einer kleinstmöglichen Grundflächenkontur (60) als den die Verpackungsschale (12) repräsentierenden Bildbereich zu ermitteln, welche die Menge von Bildpunkten umgrenzt, so dass alle oder zumindest ein vorgegebener Großteil aller Bildpunkte innerhalb der Grundflächenkontur (60) liegt, wenn das bearbeitete Bild aus dem Differenzbild erzeugt wurde,
oder
**dass** die Auswerteeinrichtung (16) dazu eingerichtet ist, die Abmessungen der Grundfläche in dem bearbeiteten Bild auf der Grundlage der Fläche einer größtmöglichen Grundflächenkontur (60) als den die Verpackungsschale (12) repräsentierenden Bildbereich zu ermitteln, welche die Menge von Bildpunkten von einem zentralen, bildpunktefreien Bereich trennt, so dass alle oder zumindest ein vorgegebener Großteil aller Bildpunkte außerhalb der Grundflächenkontur (60) liegt, wenn das bearbeitete Bild aus dem Bild der Aufsicht der Verpackungsschale (12) erzeugt wurde.

8. Objektvermessungssystem (10) nach Anspruch 7,
**dadurch gekennzeichnet,**
**dass** die Grundflächenkontur (60) der Form eines Rechtecks entspricht.

9. Verpackungsmaschine mit einem Objektvermessungssystem (10) nach einem der vorstehenden Ansprüche.

## Claims

1. An object measurement system (10) for a packaging machine, which is configured to wrap packaging trays (12) with a film, for determining the dimensions of a base surface and a height of a packaging tray (12) to be wrapped, said object measurement system (10) comprising:
a reception space (14) for the packaging tray (12),
a first and second camera (21, 22) for recording electronic images, namely color images, of a respective packaging tray (12) arranged in the reception space (14), wherein the first and second cameras (21, 22) are arranged with respect to one another and with respect to the reception space (14) such that the detection directions of the two cameras (21, 22) extend transversely, in particular orthogonally, with respect to one another and
such that the first camera (21) detects a top view of the packaging tray (12) and the second camera (22) detects a side view of the packaging tray (12), and
an evaluation device (16) connected to the cameras (21, 22) for evaluating the images of the packaging tray (12) recorded by the cameras (21, 22),
**characterized in that**
the evaluation device (16) is configured
- to determine a base surface contour (60) of the detected packaging tray (12) in a color image of the top view,
- to determine a color value for the region bounded by the base surface contour (60) in the color image of the top view,
- to select, on the basis of the determined color value in the color image of the side view, an image region which corresponds to the side surface of the detected packaging tray (12) and which has a color value corresponding to the determined color value,
- to determine the height of the detected packaging tray (12) on the basis of the selected image region corresponding to the side surface, and
- to determine the dimensions of the base surface of the detected packaging tray (12) on the basis of the determined base surface contour (60),
wherein the evaluation device (16) is configured to determine the height of the detected packaging tray (12) further on the basis of a position of the base surface contour (60) of the detected packaging tray (12) determined in an image of the top view, in particular a position of an edge (50) of the base surface contour (60) facing the second camera (22), and
wherein the evaluation device (16) is configured to determine the dimensions of the base surface of the detected packaging tray (12) on the basis of dimensions of the base surface contour (60) of the detected packaging tray (12) determined in image coordinates, which base surface contour (60) and dimensions were determined in an image of the top view,
of the height of the detected packaging tray (12) determined from the side view and of at least one characteristic function which indicates as a function value the dimensions of the base surface as a function of the dimensions of the base surface contour (60) determined in image coordinates and of the determined height.

2. An object measurement system (10) in accordance with claim 1,
**characterized in that**
the reception space (14) comprises at least a first boundary surface (31) which is disposed opposite the first camera (21) and which has, at least in a part region which can be detected by the first camera (21), a first two-dimensional material measure (41) formed by a pattern, wherein, in addition to an image of the packaging tray (12), the top view also comprises an image of detected regions of the first material measure (41, 42) not covered by the packaging tray (12), wherein the evaluation device (16) is configured to determine the dimensions of the base surface of the detected packaging tray (12) on the basis of the region of the first material measure (41) detected in the top view.

3. An object measurement system (10) in accordance with claim 2,
**characterized in that**
the reception space (14) further comprises a second boundary surface (32) which is disposed opposite the second camera (22) and which, in each case at least in a part region which can be detected by the second camera (22), has a second two-dimensional material measure (42) formed by a pattern, wherein the side view, in addition to an image of the packaging tray (12), in particular including a product to be packaged (18) possibly received in the packaging tray (12), also comprises an image of detected regions of the second material measure (42) which are not covered by the packaging tray (12), in particular including the product to be packaged (18) possibly received in the packaging tray (12), wherein the evaluation device (16) is configured to determine, on the basis of the region of the second material measure (42) detected in the side view, at least one dimension of a side surface of the detected packaging tray (12), in particular including the product to be packaged (18) possibly received in the packaging tray (12), wherein the at least one dimension of the side surface comprises the height of the side surface of the detected packaging tray (12) and/or a total height of the side surface of the detected packaging tray (12), including the product to be packaged (18) possibly received in the packaging tray (12).

4. A camera arrangement (10) in accordance with claim 2 or claim 3,
**characterized in that**
the pattern which forms the first material measure (41) and/or a pattern which forms a second material measure (41) is/are generated on the basis of a checkerboard pattern.

5. An object measurement system (10) in accordance with any one of the claims 2 to 4,
**characterized in that**
the pattern which forms the first material measure (41) and/or a pattern which forms a second material measure (42) is/are generated on the basis of a regular pattern and a distortion function, with the distortion function being selected such that the distortion function counteracts optical distortions which are generated by an objective of the camera (21, 22) detecting the respective material measure (41, 42, 64).

6. An object measurement system (10) in accordance with any one of the claims 2 to 5,
**characterized in that**
the evaluation device (16) is configured to generate, by applying at least one image processing step, a processed image, in which that image information which represents structures of the first material measure (41) is present in the form of a set of pixels, from an image, in particular a gray-value image produced from a color image, of the top view of the packaging tray (12), including the regions of the first material measure (41) not covered by the packaging tray (12), or from a difference image which is formed by a difference between the image of the top view of the packaging tray (12) and a reference image, in particular a gray-value reference image produced from a color reference image, of the uncovered first material measure (41),
wherein the at least one image processing step is preferably selected from a group which comprises an image sharpness increase, an edge detection, a noise reduction, a detection of rectangles and a detection of corner points of the detected rectangles.

7. An object measurement system (10) in accordance with claim 6,
**characterized in that**
the evaluation device (16) is configured to determine the dimensions of the base surface in the processed image on the basis of the area of a smallest possible base surface contour (60) as the image region representing the packaging tray (12), said smallest possible base surface contour (60) bounding the set of pixels so that all the pixels or at least a predefined majority of all the pixels lie within the base surface contour (60) when the processed image has been generated from the difference image,
or
**in that** the evaluation device (16) is configured to determine the dimensions of the base surface in the processed image on the basis of the area of a largest possible base surface contour (60) as the image region representing the packaging tray (12), said largest possible base surface contour (60) separating the set of pixels from a central pixel-free region so that all the pixels or at least a predefined majority of all the pixels lie outside the base surface contour (60) when the processed image has been generated from the image of the top view of the packaging tray (12).

8. An object measurement system (10) in accordance with claim 7,
**characterized in that**
the base surface contour (60) corresponds to the shape of a rectangle.

9. A packaging machine having an object measurement system (10) in accordance with any one of the preceding claims.

## Revendications

1. Système de mesure d'objets (10) destiné à une machine d'emballage, conçue pour envelopper des barquettes d'emballage (12) avec un film, pour déterminer les dimensions d'une surface de base et d'une hauteur d'une barquette d'emballage (12) à envelopper, comprenant :
un espace de réception (14) pour la barquette d'emballage (12),
une première et une deuxième caméra (21, 22) pour prendre des images électroniques, à savoir des images en couleur, d'une barquette d'emballage (12) respective disposée dans l'espace de réception (14), la première et la deuxième caméra (21, 22) étant disposées l'une par rapport à l'autre et par rapport à l'espace de réception (14) de telle manière que les directions de saisie des deux caméras (21, 22) s'étendent transversalement, en particulier orthogonalement, l'une par rapport à l'autre, et que la première caméra (21) saisit une vue de dessus de la barquette d'emballage (12) et la deuxième caméra (22) saisit une vue de côté de la barquette d'emballage (12), et
un dispositif d'évaluation (16) relié aux caméras (21, 22) pour évaluer les images de la barquette d'emballage (12) prises par les caméras (21, 22),
**caractérisé en ce que**
le dispositif d'évaluation (16) est conçu pour
- déterminer, dans une image en couleur de la vue de dessus, un contour de surface de base (60) de la barquette d'emballage (12) saisie,
- déterminer, dans l'image en couleur de la vue de dessus, une valeur chromatique pour la zone délimitée par le contour de surface de base (60),
- sélectionner, sur la base de la valeur chromatique déterminée, dans l'image en couleur de la vue de côté, une zone d'image correspondant à la surface latérale de la barquette d'emballage (12) saisie, qui présente une valeur chromatique correspondant à la valeur chromatique déterminée,
- déterminer, sur la base de la zone d'image sélectionnée correspondant à la surface latérale, la hauteur de la barquette d'emballage (12) saisie, et
- déterminer, sur la base du contour de surface de base (60) déterminé, les dimensions de la surface de base de la barquette d'emballage (12) saisie, dans lequel
le dispositif d'évaluation (16) est conçu pour déterminer la hauteur de la barquette d'emballage saisie (12) en outre sur la base d'une position du contour de surface de base (60), déterminé dans une image de la vue de dessus, de la barquette d'emballage (12) saisie, en particulier sur la base d'une position d'un bord (50) du contour de surface de base (60) tourné vers la deuxième caméra (22), et
le dispositif d'évaluation (16) est conçu pour déterminer les dimensions de la surface de base de la barquette d'emballage saisie (12) sur la base des dimensions, déterminées en coordonnées d'image, du contour de surface de base (60) de la barquette d'emballage (12) saisie, contour de surface de base (60) et dimensions qui ont été déterminés dans une image de la vue de dessus, sur la base de la hauteur de la barquette d'emballage saisie (12), déterminée à partir de la vue de côté, et sur la base d'au moins une fonction caractéristique qui indique, en tant que valeur fonctionnelle, les dimensions de la surface de base en fonction des dimensions, déterminées en coordonnées d'image, du contour de surface de base (60) et de la hauteur déterminée.

2. Système de mesure d'objets (10) selon la revendication 1,
**caractérisé en ce que**
l'espace de réception (14) comprend au moins une première surface de délimitation (31) opposée à la première caméra (21), laquelle présente, au moins dans une zone partielle pouvant être saisie par la première caméra (21), une première mesure matérialisée bidimensionnelle (41) formée par un motif, la vue de dessus comprenant, outre une image de la barquette d'emballage (12), également une image des zones saisies de la première mesure matérialisée (41, 42) qui ne sont pas cachées par la barquette d'emballage (12), le dispositif d'évaluation (16) étant conçu pour déterminer les dimensions de la surface de base de la barquette d'emballage saisie (12) sur la base de la zone, saisie en vue de dessus, de la première mesure matérialisée (41).

3. Système de mesure d'objets (10) selon la revendication 2,
**caractérisé en ce que**
l'espace de réception (14) comprend en outre une deuxième surface de délimitation (32) opposée à la deuxième caméra (22), laquelle présente, au moins dans une zone partielle respective pouvant être saisie par la deuxième caméra (22), une deuxième mesure matérialisée bidimensionnelle (42) formée par un motif, la vue de côté comprenant, outre une image de la barquette d'emballage (12), en particulier y compris un produit à emballer (18) éventuellement reçu dans la barquette d'emballage (12), également une image des zones saisies de la deuxième mesure matérialisée (42) qui ne sont pas cachées par la barquette d'emballage (12), en particulier y compris le produit à emballer (18) éventuellement reçu dans la barquette d'emballage (12), le dispositif d'évaluation (16) étant conçu pour, sur la base de la zone, saisie en vue de côté, de la deuxième mesure matérialisée (42), déterminer au moins une dimension d'une surface latérale de la barquette d'emballage (12) saisie, en particulier y compris le produit à emballer (18) éventuellement reçu dans la barquette d'emballage (12), ladite au moins une dimension de la surface latérale comprenant la hauteur de la surface latérale de la barquette d'emballage (12) saisie et/ou une hauteur totale de la surface latérale de la barquette d'emballage (12) saisie, y compris le produit à emballer (18) éventuellement reçu dans la barquette d'emballage (12).

4. Système de mesure d'objets (10) selon la revendication 2 ou 3,
**caractérisé en ce que**
**que** le motif constituant la première mesure matérialisée (41) et/ou un motif constituant une deuxième mesure matérialisée (42) est généré sur la base d'un motif en damier.

5. Système de mesure d'objets (10) selon l'une des revendications 2 à 4,
**caractérisé en ce que**
le motif constituant la première mesure matérialisée (41) et/ou un motif constituant une deuxième mesure matérialisée (42) est généré sur la base d'un motif régulier et d'une fonction de distorsion, la fonction de distorsion étant choisie de telle sorte que la fonction de distorsion s'oppose aux déformations optiques générées par un objectif de la caméra (21, 22) qui saisit la mesure matérialisée respective (41, 42, 64).

6. Système de mesure d'objets (10) selon l'une des revendications 2 à 5,
**caractérisé en ce que**
le dispositif d'évaluation (16) est conçu pour produire, à partir d'une image, en particulier à partir d'une image en niveaux de gris issue d'une image en couleur, de la vue de dessus de la barquette d'emballage (12), y compris les zones de la première mesure matérialisée (41) non cachées par la barquette d'emballage (12), ou à partir d'une image différentielle formée par une différence entre l'image de la vue de dessus de la barquette d'emballage (12) et une image de référence, en particulier une image de référence en niveaux de gris issue d'une image de référence en couleur, de la première mesure matérialisée (41) non cachée, une image traitée en appliquant au moins une étape de traitement d'image, image traitée dans laquelle les informations d'image qui représentent des structures de la première mesure matérialisée (41) se présentent sous la forme d'un ensemble de points d'image,
de préférence, ladite au moins une étape de traitement d'image est choisie dans un groupe comprenant une augmentation de la netteté de l'image, une détection des bords, une réduction du bruit, une détection des rectangles et une détection des points d'angle des rectangles détectés.

7. Système de mesure d'objets (10) selon la revendication 6,
**caractérisé en ce que**
le dispositif d'évaluation (16) est conçu pour déterminer les dimensions de la surface de base dans l'image traitée sur la base de la superficie d'un contour de surface de base (60) le plus petit possible en tant que zone d'image représentant la barquette d'emballage (12), qui délimite l'ensemble de points d'image, de sorte que tous les points d'image ou au moins une majorité prédéterminée se trouvent à l'intérieur du contour de surface de base (60) lorsque l'image traitée a été produite à partir de l'image différentielle,
ou
**en ce que** le dispositif d'évaluation (16) est conçu pour déterminer les dimensions de la surface de base dans l'image traitée sur la base de la superficie d'un contour de surface de base (60) le plus grand possible en tant que zone d'image représentant la barquette d'emballage (12), qui sépare l'ensemble de points d'image d'une zone centrale exempte de points d'image, de sorte que tous les points d'image ou au moins une majorité prédéterminée se trouvent à l'extérieur du contour de surface de base (60) lorsque l'image traitée a été produite à partir de l'image en vue de dessus de la barquette d'emballage (12).

8. Système de mesure d'objets (10) selon la revendication 7,
**caractérisé en ce que**
le contour de surface de base (60) correspond à la forme d'un rectangle.

9. Machine d'emballage comprenant un système de mesure d'objets (10) selon l'une des revendications précédentes.
